# EUROPÄISCHE PATENTSCHRIFT

(11) **EP 1 566 226 B1**
(45) Veröffentlichungstag und Bekanntmachung des Hinweises auf die Patenterteilung: **23.01.2008**
(21) Anmeldenummer: 05010085.8
(22) Anmeldetag: 15.10.2002
(51) Int. Cl.: B07C 3/00

(54) **Verfahren zur Bearbeitung von auf Oberflächen von Postsendungen befindlichen graphischen Informationen**
Method for processing of graphical information situated on the surface of postal items
Méthode de traitement d'informations graphiques situées sur la surface d'un article courrier

(30) Priorität: 16.10.2001 DE 10150457
(43) Veröffentlichungstag der Anmeldung: 24.08.2005
(62) Teilanmeldung aus: 02782708.8
(73) Patentinhaber: Deutsche Post AG, 53113 Bonn (DE)
(72) Erfinder: Fery, Peter, Dr., 64673 Zwingenberg (DE); Helmus, Jürgen, 53229 Bonn (DE); Meier, Gunther, 64354 Reinheim (DE); Stumm, Dieter, 26629 Grossefehn (DE); Vullriede, Carsten, 29693 Hodenhagen (DE)
(74) Vertreter: Jostarndt, Hans-Dieter

(56) Entgegenhaltungen:
- WO-A-02/19276
- WO-A-02/25597
- CA-A1- 2 265 326

## Beschreibung

Die Erfindung betrifft ein Verfahren zum Bearbeiten von Postsendungen, wobei auf den Postsendungen befindliche graphische Informationen erfasst und ausgewertet werden. Die auf der Oberfläche der Sendungen befindlichen graphischen Informationen werden in mehreren Bearbeitungsstationen erfasst, an eine Bildverarbeitungseinheit übermittelt und von der Bildverarbeitungseinheit bearbeitet.

Aus der europäischen Patentanmeldung EP 0 913 208 A1 ist ein Verfahren und eine Anordnung zur Ermittlung von Verteilinformationen bekannt. Zur Bestimmung der verteilinformationen werden die Anschriften von Sendungen in einer Bearbeitungsmaschine mit einem OCR-System eingelesen, wobei es sich bei der Bearbeitungsmaschine insbesondere um eine Sortiermaschine handelt. Nach eindeutiger Erkennung der Verteilinformationen während einer Zwischenspeicherung werden die Sendungen in einer mechanischen Laufzeitstrecke mit einem entsprechenden Code versehen. Die vom OCR-System nicht gelesenen Sendungen werden auf Videocodierplätzen eines Videocodiersystems dargestellt und manuell codiert. In jeder Bearbeitungsmaschine werden die Bilder der Sendungen gespeichert und verwaltet, deren Verteilinformationen in einer Zwischenspeicherung der Sendungen nicht automatisch eindeutig erkannt wurden. Der Füllstand der mechanischen Laufzeitstrecke mehrerer Bearbeitungsmaschinen wird regelmäßig als Statusinformation erfasst, und daraus wird ein Rangordnungswert ermittelt. Jeder Videokodierplatz fordert bei Bedarf die aktuellen Rangordnungswerte aller Bearbeitungsmaschinen ab, führt nach einheitlichen Regeln eine zufallaüberlagerte Auswahl einer Bearbeitungsmaschine durch und fordert von dieser Bearbeitungsmaschine das nächste Bild an.

CA-A-2 265 326 offenbart ein Verfahren zum Bearbeiten von Postsendungen nach dem Oberbegriff von Anspruch 1.

Der Erfindung liegt die Aufgabe zugrunde, die Verarbeitung von graphischen Informationen auf Postsendungen zuverlässig und in einer für einen Massenbetrieb in Postzentren geeigneten Geschwindigkeit durchzuführen, wobei insbesondere eine effektive Entgeltüberprüfung ermöglicht werden soll.

Erfindungsgemäß wird diese Aufgabe durch ein Verfahren mit den Merkmalen des Anspruchs 1 gelöst.

Bei dem erfindungsgemäßen Verfahren zum Bearbeiten von Postsendungen werden auf den Postsendungen befindliche graphische Informationen erfasst und ausgewertet. Dabei werden die auf der Oberfläche der Sendungen befindlichen graphischen Informationen in mehreren Bearbeitungsstationen erfasst, an eine Bildverarbeitungseinheit übermittelt und von der Bildverarbeitungseinheit bearbeitet. Durch einen vergleich zwischen den auf den Postsendungen vorhandenen graphischen Informationen und erwarteten graphischen Informationen erfolgt eine Überprüfung des für die Postsendungen entrichteten Entgelts. Die Überprüfung, ob die Postsendungen ein erwartetes Entgelt aufweisen, findet zweistufig statt, wobei zunächst lokal im Bereich der Bearbeitungsmaschinen die auf den Postsendungen vorhandenen graphischen Informationen mit den erwarteten graphischen Informationen verglichen werden. Für die graphischen Informationen der Postsendungen, bei denen Abweichungen zwischen den vorhandenen graphischen Informationen und den erwarteten graphischen Informationen im Bereich der Bearbeitungs maschinen ermittelt wurden, erfolgt ein erneuter Vergleich zwischen den ermittelten graphischen Informationen und den erwarteten graphischen Informationen in der zentralen Bildverarbeitungseinheit.

Eine Erhöhung der Geschwindigkeit der verarbeitung der graphischen Informationen lässt sich dadurch erzielen, dass die auf der Oberfläche der Postsendungen befindlichen graphischen Informationen zuerst lokal ausgewertet werden, dass ermittelt wird, ob die graphischen Informationen von erwarteten graphischen Informationen abweichen und dass für den Fall, dass die ermittelten graphischen Informationen von erwarteten graphischen Informationen abweichen, die ermittelten graphischen Informationen an eine zentrale Bildverarbeitungseinheit übermittelt werden.

Es ist besonders vorteilhaft, dass eine Sortierung der Postsendungen in Abhängigkeit von den ermittelten graphischen Informationen erfolgt.

Die auf den Postsendungen vorhandenen graphischen Informationen werden vorzugsweise auch für weitere Anwendungen eingesetzt, beispielsweise um eine schnelle und zuverlässige Adressierung der Postsendungen zu erzielen.

Eine besonders geeignete Vorrichtung zum Bearbeiten von Postsendungen mit mehreren Bearbeitungsmaschinen für die Postsendungen, wobei die Bearbeitungsmaschinen Mittel zum Erfassen von auf den Postsendungen befindlichen graphischen Informationen enthalten, zeichnet sich dadurch aus, dass die Mittel zum Erfassen der graphischen Informationen mit wenigstens einem Mittel zum Verarbeiten der graphischen Informationen derart verbunden sind, dass das Mittel zum Verarbeiten der graphischen Informationen die graphischen Informationen von mehreren Bearbeitungsmaschinen verarbeiten kann.

Bei der nachfolgenden Darstellung enthält ein Bearbeitungszentrum für Postsendungen, beispielsweise ein Brief- oder Frachtzentrum, eine zentrale Bildverarbeitungseinheit. Die dazugehörige Darstellung ist besonders vorteilhaft, da sie einen möglichst effektiven Einsatz von Rechenkapazitäten bei geringem Einsatz von Datenübertragungen zwischen den verschiedenen Recheneinheiten ermöglicht.

Die Erfindung ist jedoch nicht auf die dargestellten Beispiele beschränkt. Beispielsweise kann ein Bearbeitungszentrum für Postsendungen mehrere zentrale Bildverarbeitungseinheiten enthalten oder eine zentrale Bildverarbeitungseinheit kann die graphischen Informationen mehrerer Brief- oder Frachtzentren verarbeiten.

Bei dem nachfolgenden Beispiel ist innerhalb eines Briefzentruma das Bildverarbeitungssystem mit anderen Komponenten an ein lokales Computernetzwerk angeschlossen.

Das Bildverarbeitungssystem hat eine Verbindung zu den jeweiligen Briefbearbeitungsmaschinen, insbesondere den Anschriftenlesemaschinen oder den videocodierplätzen.

In dem dargestellten Fall dient das Bildverarbeitungssystem zu einer Bearbeitung von Sendungsbildern, die von den Primärlesern der Bildverarbeitungsmaschinen nicht erfolgreich gelesen werden konnten. Alternativ ist es möglich, die Sendungsbilder im Wesentlichen aller Primärleser mit der zentralen Bildverarbeitungseinheit zu bearbeiten. Beispielsweise ist es möglich, diese Bearbeitung unabhängig von dem Leseergebnis der Primärleser durchzuführen.

Das Bildverarbeitungssystem erhält von den Bildbearbeitungsmaschinen die auf den Postsendungen vorhandenen graphischen Informationen und vorzugsweise zusätzlich Begleitinformationen.

Eine besonders schnelle und zuverlässige Bearbeitung der Postsendungen lässt sich dadurch erzielen, dass die Begleitinformationen Ergebnisse eines oder mehrerer Überprüfungsachritte der Postsendungen enthalten.

Die Verarbeitung der auf den Postsendungen vorhandenen graphischen Informationen kann sowohl sequentiell als auch parallel erfolgen.

Insbesondere ist es vorteilhaft, das Verfahren so durchzuführen, dass vorhandene Hildverarbeitungekapazitäten durch eine wirksame Verteilung der Bildverarbeitungsaufgaben auf verschiedene Bildverarbeitungseinheiten möglichst effektiv genutzt werden.

In dem dargestellten Bildverarbeitungssystem wirken die mit den Bearbeitungsmaschinen verbundenen lokalen Bildverarbeitungseinheiten als Primärleser und die spezialisierten Leseeinheiten als Sekundärleser. Es ist jedoch gleichfalls möglich, dass die Bildverarbeitungseinheiten anderer Bearbeitungsmaschinen als Sekundärleser wirken. Hierdurch wird die jeweils vorhandene Bearbeitungskapazität der Bildverarbeitungsgeräte genutzt.

Eine derartige Vorgehensweise eignet sich insbesondere für eine rasche Anpassung der Bildverarbeitungskapazitäten an Besonderheiten des betrieblichen Ablaufs. Beispielsweise kann bei einem Ausfall von mechanischen Komponenten einer Briefbearbeitungsmaschine die in ihr vorhandene Bildbearbeitungskapazität von den anderen Bildverarbeitungsmaschinen genutzt werden, so dass auch bei Betriebsstörungen eine Beeinträchtigung der Bearbeitung der Postsendungen möglichst vermieden wird.

Durch die dargestellten Maßnahmen kann der Bildverarbeitungsprozess schnell, wirksam und zuverlässig erfolgen.

Vorzugsweise beinhaltet der Bildverarbeitungsprozess die folgenden Schritte:

Zuerst werden die auf den Postsendungen vorhandenen graphischen Informationen erfasst, beispielsweise durch einen oder mehrere Sensoren und/oder eine Kamera.

Falls die Informationen nicht bereits in digitaler Form gewonnen werden, ist eine Digitalisierung der graphischen Informationen vorteilhaft.

Anschließend werden die graphischen Informationen einem oder mehreren Bildverarbeitungsschritten unterzogen.

Die Bildverarbeitungsschritte können sowohl eine Auswertung der graphischen Informationen als auch eine gezielte Weiterleitung der graphischen Informationen an eine Bildverarbeitungseinheit umfassen, die eine spezialisierte und/oder freie Bearbeitungskapazität aufweist.

Der Begriff der Bildverarbeitung, beziehungsweise der Bildverarbeitungseinheit, ist daher in keiner Weise einschränkend zu verstehen. Insbesondere umfasst er die Transformation der graphischen Informationen in weitere graphische Informationen, beispielsweise die Umwandlung in ein anderes Format, die Weiterleitung der graphischen Informationen und/oder die Auswertung von in den graphischen Informationen enthaltenen, beziehungsweise aus den graphischen Informationen gewinnbaren weiteren Informationen, wie dem Lesen einer Empfängeradresse oder dem Entziffern einer in den graphischen Informationen enthaltenen codierten Information.

Außerdem beinhaltet der Begriff der Bildverarbeitung auch die Merkmale, die auf dem Gebiet der Bildverarbeitung gelegentlich als Bildinterpretation bezeichnet werden. Hierunter ist beispielsweise das Entziffern von Empfängeradressen durch das Lesen der die Empfängeradresse wiedergebenden graphischen Informationen (beispielsweise in Handschrift) mit umfasst ??.

Vorzugsweise erfolgt die Aufteilung der verschiedenen Bildverarbeitungsschritte auf verschiedene Bildverarbeitungseinheiten in Abhängigkeit von der jeweiligen Spezifizierung der Bildverarbeitungseinheit und/oder der freien Kapazität der Bildverarbeitungseinheiten.

Beispielsweise kann die Bearbeitung von Sendungen, die digitale Freimachungsvermerke enthalten, wie folgt durchgeführt werden:

In einer ersten Bildverarbeitungseinheit, die vorzugsweise einer der Bearbeitungsvorrichtungen für Postsendungen zugeordnet ist, wird zunächst durch eine separate Prozessroutine überprüft, ob die lokale Bildverarbeitungseinheit ausreichend Bearbeitungskapazität zur Verarbeitung der auf der Postsendung befindlichen graphischen Information enthält.

Ist dies nicht der Fall, werden die graphischen Informationen an eine freie Bearbeitungskapazität aufweisende weitere Bildverarbeitungseinheit weitergeleitet.

Auch für den Fall, dass die der Bearbeitungsmaschine für die Postsendung zugeordnete Bildverarbeitungseinheit eine für die Verarbeitung der Bilddaten ausreichende Kapazität aufweist, ist für einzelne Postsendungen eine Weiterleitung der erfassten graphischen Informationen vorteilhaft.

Eine Weiterleitung der graphischen Informationen ist insbesondere dann zweckmäßig, wenn die graphischen Informationen ganz oder teilweise einer speziellen Freimachung entsprechen. Insbesondere ist eine derartige Weiterleitung zweckmäßig, wenn die graphischen Informationen einer speziellen Freimachungsart, beispielsweise einer Absenderfreistempelung oder einer digitalen Freimachung entsprechen.

Die Bilddaten derartiger Sendungen werden an die spezialisierten Leser für die Freimachungsarten Absenderfreimachung AFM und digitaler Frankiervermerke (PC-Frankierung) PC-F weitergeleitet.

wird das Vorhandensein einer derartigen Freimachungsart erkannt, werden die hierzu gehörenden Überprüfungsschritte durchgeführt.

Beispielsweise übernimmt der AFM-Leser als Beispiel eines spezialisierten Lesegerätes das Sendungsbild von der zentralen Bildverarbeitungseinheit.

Der AFM-Leser sucht anschließend innerhalb einer erwarteten Freimachungszone nach einer Absenderfreimachung. Der Abdruck der Absenderfreistempelung besteht vorzugsweise aus drei Teilen, aus denen der AFM-Leser den Freistempelabdruck erkennt.

Vorzugsweise sind dies der Entgeltstempelabdruck mit Erkennung der Stempelmaschine, der Tagesstempelabdruck und das zusätzliche Feld für Absenderangabe und Werbung.

Der AFM-Leser erkennt den Entgeltstempelabdruck als Ganzes und identifiziert ihn anhand eines oder mehrerer geeigneter graphischen Symbole, beispielsweise eines in dem Entgeltstempel enthaltenen Posthorns.

Anschließend liest der AFM-Leser die Kennung des Entgeltstempels und den eingedruckten Entgeltbetrag.

Für den Fall, dass der Freistempelabdruck nicht gelesen werden kann oder nicht einem erwarteten Freistempelabdruck entspricht, wird eine Warnmeldung erzeugt.

Eine derartige Warnmeldung kann vorzugsweise die Form eines geeigneten Entgeltsicherungscodes aufweisen, beispielsweise als sogenannte Entgeltsicherungscodierung auf den möglichen Grund eines Fälschungsverdachts hinweisen.

Beispiele einer derartigen Entgeltsicherungscodierung sind die Informationen, dass die Kennung oder die Freimachung nicht lesbar sind.

Bei einem Einsatz von digitalen Freimachungsvermerken werden beispielsweise in dem Freimachungsvermerk enthaltene verschlüsselte Informationen mit den auf der zugehörigen Postsendung enthaltenen unverschlüsselten Informationen verglichen.

Bei Abweichungen, beispielsweise für den Fall, dass die Postsendung eine Empfängeradresse enthält, die nicht den in dem digitalen Freimachungsvermerk enthaltenen verschlüsselten Adressen entspricht, wird die entsprechende Sendung gleichfalls mit einem Entgeltsicherungscode versehen.

Die mit derartigem Entgeltsicherungscode versehenen Postsendungen können mit geeigneten weiteren Überprüfungsschritten bearbeitet und/oder gezielt aus dem Sendungsverlauf ausgeschleust werden.

Das dargestellte Bildverarbeitungsverfahren eignet sich für einen derartigen Einsatz in einem Entgeltsicherungssystem besonders, jedoch kann es auch sonst zu einer wirksameren Steuerung der Verarbeitung der Postsendungen eingesetzt werden.

## Patentansprüche

1. verfahren zum Bearbeiten von Postsendungen, wobei auf den Postsendungen befindliche graphische Informationen erfasst und ausgewertet werden, wobei die auf der Oberfläche der Sendungen befindlichen graphischen Informationen in mehreren Bearbeitungsstationen erfasst, an eine Bildverarbeitungseinheit übermittelt und von der Bildverarbeitungseinheit bearbeitet werden, wobei durch einen vergleich zwischen den auf den Postsendungen vorhandenen graphischen Informationen und erwarteten graphischen Informationen eine Überprüfung des für die Postsendungen entrichteten Entgelts erfolgt **dadurch gekennzeichnet, dass** die Überprüfung, ob die Postsendungen ein erwartetes Entgelt aufweisen, zweistufig stattfindet, wobei zunächst lokal im Bereich der Bearbeitungsmaschinen die auf den Postsendungen vorhandenen graphischen Informationen mit den erwarteten graphischen Informationen verglichen werden, und dass die graphischen Informationen der Postsendungen, bei denen Abweichungen zwischen den vorhandenen graphischen Informationen und den erwarteten graphischen Informationen im Bereich der Bearbeitungsmaschinen ermittelt wurden, ein erneuter Vergleich zwischen den ermittelten graphischen Informationen und den erwarteten graphischen Informationen in der zentralen Bildverarbeitungseinheit erfolgt.

## Claims

1. A method for processing mailpieces, whereby graphic information present on the mailpieces is detected and evaluated, whereby the graphic information present on the surface of the mailpieces is detected in several processing stations, then it is transmitted to an image processing unit and processed by the image processing unit, whereby the expected payment made for the mailpieces is checked by comparing the graphic information present on the mailpieces with the expected graphic information,
**characterized in that**
the checking procedure to ascertain whether the mailpieces have an expected payment is performed in two stages, whereby first of all, the graphic information present on the mailpieces is compared to the expected graphic information locally in the area of the processing machines, and **in that** the graphic information of the mailpieces in which differences between the existing graphic information and the expected graphic information were ascertained in the area of the processing machines undergoes another comparison between the ascertained graphic information and the expected graphic information in the central image processing unit.

## Revendications

1. Méthode de traitement d'envois postaux, dans laquelle des informations graphiques se trouvant sur les envois postaux sont détectées et analysées, dans laquelle les informations graphiques se trouvant sur la surface des envois postaux sont détectées en plusieurs stations de traitement, transmises à une unité de traitement d'images et traitées par l'unité de traitement d'images, dans laquelle une vérification des frais de port payés pour les envois postaux est effectuée par comparaison entre les informations graphiques se trouvant sur les envois postaux et des informations graphiques attendues,
**caractérisé en ce que** la vérification relative aux frais de port payés pour les envois postaux et des frais de port attendus se déroule en deux étapes, dont la première consiste en une comparaison locale au niveau des machines de traitement entre les informations graphiques se trouvant sur les envois postaux et les informations graphiques attendues, et dont la deuxième consiste à comparer de nouveau dans l'unité centrale de traitement d'images les informations graphiques détectées avec les informations graphiques attendues, pour les envois postaux pour lesquels il a été déterminé au niveau des machines de traitement des différences entre les informations graphiques attendues et les informations graphiques détectées.
